# EUROPEAN PATENT APPLICATION

(11) **EP 4 082 393 A1**
(43) Date of publication of application: **02.11.2022**
(21) Application number: 21171087.6
(22) Date of filing: 29.04.2021
(51) Int. Cl.: A47B 77/08

(54) **CABINET WITH A BUILD-IN DOCKING STATION**

(71) Applicant: BSH Hausgeräte GmbH, 81739 München (DE)
(72) Inventor: Sagoo, Kiran Pal, 82256 Fürstenfeldbruck (DE)

(57) **Abstract**

A cabinet (100) configured to be attached to and/or to be placed against a wall of a room, notably a kitchen, is described. The cabinet (100) comprises a mounting (101) for attaching a handheld electronic device (150) to the cabinet (100). Furthermore, the cabinet (100) comprises one or more input elements (104, 105) configured to capture input data regarding a user input for the electronic device (150) placed within the mounting (101), and a control unit (106) configured to cause the electronic device (150) to be controlled in dependence of the input data.

## Description

The present document relates to a cabinet, in particular a kitchen cabinet, with a build-in docking station for an electronic device.

An electronic device, such as a tablet PC or a smartphone, may be used within a household, notably within a kitchen, to provide support for a household task, such as cooking. By way of example, the user may use the electronic device to search for a recipe and to render, e.g., to display, cooking instructions from the recipe. During a cooking process, it may be difficult for the user to interact with the electronic device, as the user may have wet hands.

The present document addresses the technical problem of increasing the comfort of use of an electronic device within a household, in particular within a kitchen. The technical problem is solved by the independent claim. Preferred examples are described in the dependent claims.

According to an aspect, a cabinet which may be configured to be attached to and/or to be placed against a wall of a room, in particular a kitchen, is described. The cabinet may be a kitchen cabinet, notably a hanging kitchen cabinet and/or a kitchen cabinet of a fitted kitchen. The cabinet may have the form of a cuboid. The cabinet may comprise side walls which may form a rectangular frame. The side walls of the cabinet may extend away from the wall that the cabinet is attached to and/or placed against. In particular, the side walls of the cabinet may be perpendicular to the wall that the cabinet is attached to and/or placed against. Furthermore, the cabinet may comprise a front panel which may cover the rectangular frame formed by the side walls of the cabinet. The front panel may be parallel to the wall that the cabinet is attached to and/or placed against. The cabinet may have a width of 20cm or more, a height of 20cm or more and/or a depth of 20cm or more. The side walls and/or the front panel of the cabinet may comprise wood. In particular the side walls and/or the front panel may be formed using fibreboard, notably medium-density fibreboard (MDF), and/or (plain) wood.

The cabinet comprises a mounting (also referred to herein as a support) for holding a handheld electronic device (such as a tablet PC or a smartphone), which typically comprises a display. The mounting may be dimensioned for (differently sized) electronic devices having a display size for 5 inches or more and/or of 15 inches or less. Furthermore, the mounting may be dimensioned for electronic devices having a width (perpendicular to the display) of 2mm or more and/or 15mm or less.

As already indicated above, the cabinet typically comprises a front panel which is intended to face a user of the cabinet. The front panel may be turned away from the wall that the cabinet is attached to and/or placed against. Furthermore, the front panel may delimit the interior of the cabinet (which may e.g., be used for storing food items, cooking equipment or dishes). Furthermore, the cabinet may comprise a side wall which extends away from the wall that the cabinet is attached to and/or placed against. In particular, the cabinet may comprise a lower side wall and an upper side wall which are arranged parallel to the ground that the cabinet is standing on or is aligned to. Furthermore, the cabinet may comprise perpendicular side walls which are arranged perpendicular to the ground that the cabinet is standing on or is aligned to.

The mounting of the cabinet may be configured to attached a (handheld) electronic device at or in front of the front panel of the cabinet (with the display facing the user of the cabinet).

The mounting comprises one or more input elements (notably a control button, a gesture sensor and/or one or more microphones) configured to capture input data regarding a user input for the electronic device which is placed within the mounting. The one or more input elements may be positioned at the front panel of the cabinet, for enabling a comfortable user input.

In addition, the cabinet comprises a control unit (e.g., a microprocessor) which is configured to cause the electronic device to be controlled in dependence of the input data captured by the one or more input elements of the cabinet. The control may be performed via a (wireline or wireless) communication link between the cabinet and the electronic device which is placed within the mounting of the cabinet.

Hence, a (kitchen) cabinet is described which comprises a build-in docking station for an electronic device, thereby allowing a comfortable and safe interaction of a user with the electronic device (e.g., when cooking). In particular, the one or more input elements of the cabinet may be used to (fully) control the electronic device (without the need for a direct user input at the electronic device).

The control unit may be configured to detect that an electronic device has been placed within the mounting of the cabinet. This may be detected using one or more sensors of the cabinet. Furthermore, the control unit may be configured, in reaction to this, to automatically establish the (wireline or wireless) communication link with the electronic device. Hence, an automatic docking process may be performed when an electronic device is placed within the mounting of the cabinet, thereby increasing the comfort for a user of the cabinet.

The communication link between the electronic device and the control unit of the cabinet may be used for exchanging data. In particular, the control unit may be enabled to control the electronic device via the communication link. Alternatively, or in addition, the communication link may be used to provide data (e.g., audio data) from the electronic device to the control unit.

The cabinet may comprise a gesture sensor (as an input element), notably at the front panel of the cabinet, which is configured to sense gesture data regarding a gesture performed by a user (in front of the front panel of the cabinet). The control unit may be configured to cause the electronic device which is placed within the mounting to be controlled based on the gesture data (via the communication link). Hence, the user may be enabled to interact with the electronic device (notably with content displayed on the display of the electronic device) using gestures, thereby increasing the comfort of use for the user.

Alternatively, or in addition, the cabinet may comprise one or more microphones (as input elements), notably at the front panel of the cabinet, configured to capture acoustic data regarding a voice control command of a user of the cabinet. The control unit may be configured to cause the electronic device which is placed within the mounting to be controlled based on the acoustic data (via the communication link), thereby allowing the user to interact with the electronic device in a comfortable manner.

Hence, the cabinet may be configured to allow for a gesture and/or voice control of an electronic device (even for electronic devices which are not enabled for gesture and/or voice control). For this purpose, the control unit may be configured to convert the gesture data and/or the audio data into one or more control commands for controlling the electronic device. In particular, the control unit of the cabinet may be configured to map different gestures and/or different voice commands to different control commands for controlling the electronic device (e.g., using a mapping table).

The cabinet may comprise one or more speakers, notably at the front panel of the cabinet. The control unit may be configured to receive an audio signal from the electronic device placed within the mounting of the cabinet (via the communication link). Furthermore, the control unit may be configured to cause the audio signal to be rendered by the one or more speakers. Hence, the cabinet may be configured to provide the acoustic output of the electronic device, thereby further improving the user interaction with the electronic device.

The cabinet, notably the mounting, may comprise a charging element, notably a charging coil, configured to charge the electronic device which is placed within the mounting of the cabinet. The charging element may be configured to perform wireless charging of the electronic device, thereby increasing the comfort of use of the cabinet.

The cabinet typically comprises a power supply which is configured to supply the different components of the cabinet (notably the one or more speakers, the control unit, the gesture sensor, the charging element, etc.) with electrical energy.

The mounting may be configured to move between a retracted position, where the mounting may form a flat surface with the front panel of the cabinet, and a mounting position, where the mounting protrudes from the front panel (towards the user) allowing an electronic device to be placed within the mounting. In particular, the mounting may be configured such that pushing onto the front of the mounting (which may be aligned with the front panel of the cabinet) causes the mounting to automatically move from the retracted position to the mounting position. Alternatively, or in addition, the mounting may be configured such that the mounting can be pushed from the mounting position to the retracted position by a user of the cabinet (e.g., using one hand). Hence, the mounting may be configured such that the mounting may be hidden within the (front panel of the) cabinet. In particular, the mounting may be configured to be buried within a recess of the front panel of the cabinet. As a result of this, the safety of the cabinet may be increased and the risk of damage of the mounting may be reduced.

The mounting may be configured such that the orientation of the electronic device which is placed within the mounting may be changed, thereby increasing the comfort of use for the user of the cabinet.

The mounting may comprise an upper rail for holding the upper edge of the electronic device and a lower rail for holding the lower edge of the electronic device. Furthermore, the mounting may be configured such that the electronic device can be slid between the upper rail and the lower rail (from the side) to place the electronic device within the mounting and can be slid out from the upper and lower rails to remove the electronic device from the mounting. As a result of this, the electronic device may be attached to or detached from the cabinet in a comfortable manner.

The mounting may be configured such that the vertical distance between the lower (horizontal) rail and the upper (horizontal) rail is adjustable to the size, notably to the display size, of the electronic device. As indicated above, the mounting may be configured to hold electronic devices having a display size as low as 5 inches and/or up to a display size as high as 15 inches.

The lower rail may be attached to the upper rail via one or more extension rods allowing the vertical distance between the lower rail and the upper rail to be adjusted. The one or more extension rods may be arranged such that the one or more extension rods are hidden by the electronic device placed within the mounting.

By allowing the distance of the rails to be modified, differently sized electronic devices may be attached to the cabinet in a comfortable manner.

Alternatively, or in addition, the mounting may comprise a hook configured to form a connection with a corresponding eyelet at a backside of the electronic device for attaching the electronic device to the cabinet. The eyelet may, e.g., be attached to a cover or a case of the electronic device. The hook may comprise a hooking section configured to be slid into the eyelet at the backside of the electronic device. Furthermore, the hook may comprise a holding section configured to fix the hook to the cabinet. The hooking section and the holding section may be attached to one another via an articulation and/or pivot allowing the hooking section to be moved relative to the holding section for changing the orientation of the electronic device relative to the front panel of the cabinet. By making use of a hook as a mounting, an electronic device may be attached to the cabinet in a particularly flexible manner.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figures 1a to 1m show a first example of a cabinet with a build-in docking station; and
Figures 2a to 2j show a second example of a cabinet with a build-in docking station.

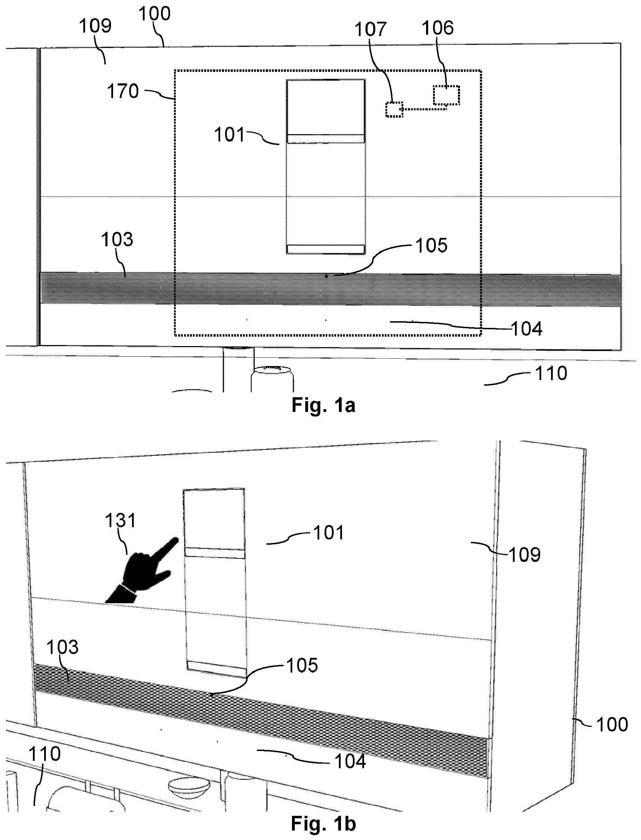

As outlined above, the present document is directed at increasing the comfort of use of a (handheld) electronic device, such as a tablet PC or a smartphone, within a household, in particular within a kitchen. In this context, Figures 1a to 1m illustrate a first example of a cabinet 100, in particular a kitchen cabinet, which comprises a build-in docking station 170 for an electronic device 150. The cabinet 100 may be configured to be attached to a wall above a kitchen worktop 110. The docking station 170 is configured to provide a user interface for an electronic device 150 which is placed within the docking station 170.

As shown in Fig. 1a, the cabinet 100 comprise a mounting or holder or support 101, onto which the electronic device 150 may be placed. The cabinet 100, in particular the docking station 170, may comprise a (wireline and/or wireless) communication interface 107 for interacting and/or communicating with the electronic device 150 that is placed onto the mounting 101 of the cabinet 100. The communication interface 107 may, e.g., comprise a USB interface. Alternatively, or in addition, the communication interface 107 may comprise a Bluetooth or a WLAN interface. The docking station 170 may be configured to exchange data with the electronic device 150 via a communication link provided by the communication interface 107.

Furthermore, the cabinet 100, in particular the build-in docking station 170, may comprise one or more control or input elements which enable a user to control the electronic device 150. In particular, the cabinet 100 may comprise a gesture sensor 105 configured to sense gesture data regarding a gesture, e.g., a hand gesture, which is performed by a user in front of the cabinet 100. Alternatively, or in addition, the cabinet 100 may comprise one or more microphones 104, e.g., a microphone array, configured to sense acoustic data regarding a voice control command of the user of the electronic device 150. The gesture sensor 105 and/or the one or more microphones 104 may be located at the front panel 109 of the cabinet 100, which is facing the user of the cabinet 100.

A control unit 106 of the cabinet 100, in particular of the build-in docking station 170, may be configured to process the gesture data and/or the acoustic data, in order to enable gesture control and/or voice control of the electronic device 150 based on the gesture data and/or the acoustic data. By way of example, the control unit 106 may be configured to send the gesture data and/or the acoustic data (or processed versions of the gesture data and/or the acoustic data) to the electronic device 105 via the communication link provided by the communication interface 107.

In addition, the cabinet 100, in particular the build-in docking station 170, may comprise one or more speakers 103, notably loudspeakers, which are configured to render an audio signal that is provided by the electronic device 150. The audio signal may be provided to the control unit 106 via the communication interface 107. Furthermore, the control unit 106 may control rendering of the audio signal using the one or more speakers 103. The speakers 103 may be located at the front panel 109 of the cabinet 100, which is facing the user of the cabinet 100.

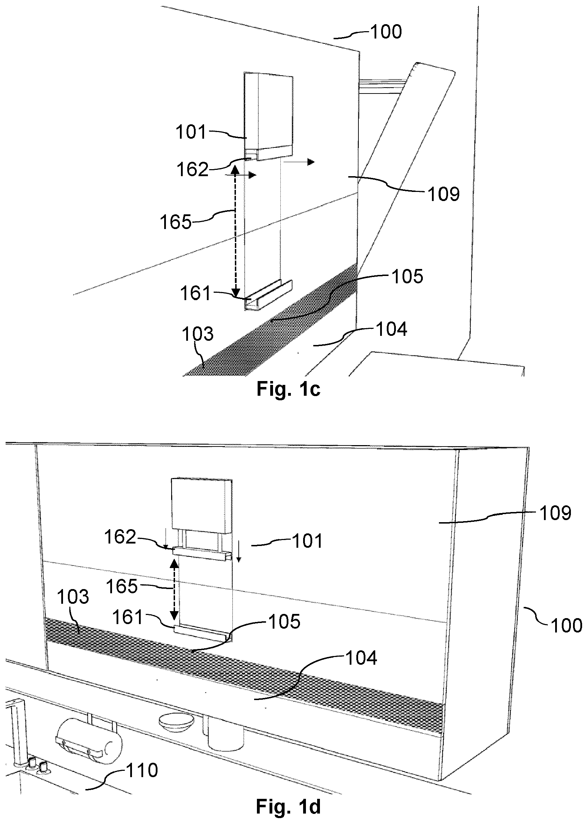

Fig. 1a shows a front view of the cabinet 100 which is placed above a kitchen worktop 110. Fig. 1b shows a perspective view of the cabinet 100. The mounting 101 may be configured to be buried and/or retracted within the cabinet, such that the retracted mounting 101 and the front plane 109 of the cabinet 100 form a flat surface. As shown in Fig. 1b, the user may push onto the front of the retracted mounting 101, in order to cause the mounting 101 to move forward out of the cabinet 100 towards the user, as illustrated in Fig. 1c. As a result of this, the mounting 101 is positioned (in a mounting position) in front of the front plane 109 of the cabinet 100.

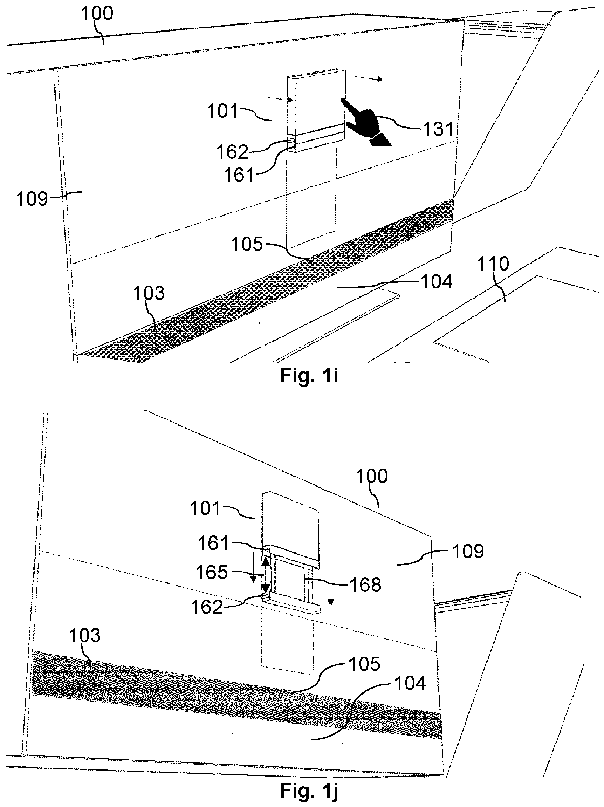

The mounting 101 may comprise one or more guide rails 161, 162 for holding an electronic device 150. A guide rail 161, 162 may be configured to hold the edge of an electronic device 150, wherein the edge may, e.g., have a width of up to 1cm. In the example of Fig. 1c, the mounting 101 comprises an upper rail 162 for the upper edge of an electronic device 150 and a lower rail 161 for the lower edge of the electronic device 150. The mounting 101 may be configured such that the distance 165 between the upper rail 162 and the lower rail 161 may be modified, to accommodate for differently sized electronic devices 150. For this purpose, at least one of the rails 162 (e.g., the upper rail 162, as shown in Fig. 1d, and/or the lower rail 161, as shown in Fig. 1j) may be movable in the vertical direction.

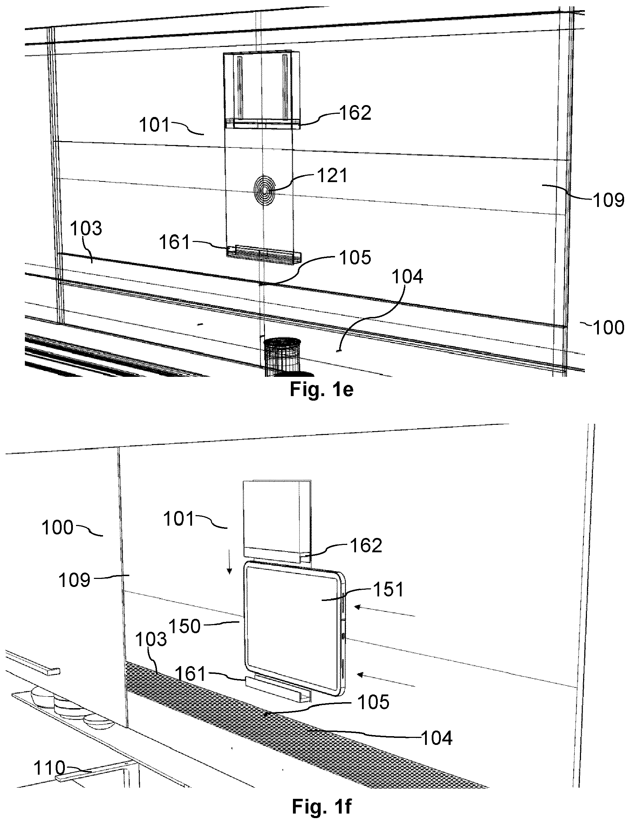

As shown in Fig. 1f, an electronic device 150 may be slid horizontally from the side between the two rails 161, 162, thereby fixing the electronic device 150 onto the cabinet 100. The electronic device 150 may be positioned such that the display 151 of the device 150 is facing the user, thereby allowing the user to interact with the device 150 via the (possibly touch sensitive) display 151 of the device 150.

The cabinet 100 may comprise a charging element 121 for charging an electronic device 150 which has been placed onto the mounting 101 of the cabinet 100. In the example shown in Fig. 1e, the charging element 121 comprises a charging coil for enabling wireless charging of the electronic device 150.

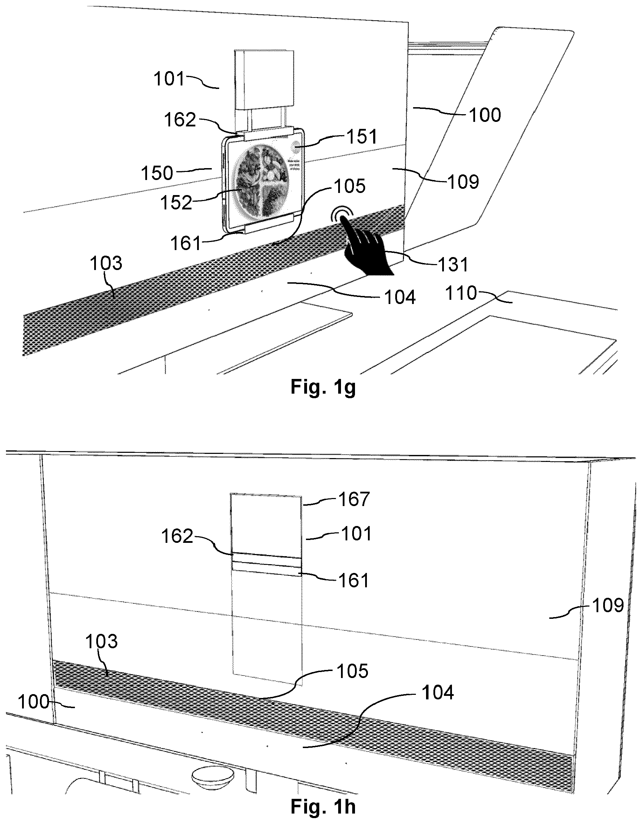

As illustrated in Fig. 1g, the user may interact with the electronic device 150 using the one or more input elements 104, 105 and/or the one or more output elements 103 provided by the build-in docking station 170 of the cabinet 100. In particular, the gesture sensor 105 of the cabinet 100 may be used to capture one or more hand gestures of the user. The control unit 106 may be configured to control the electronic device 150 based on the one or more hand gestures captured by the gesture sensor 105 of the cabinet 100. In a similar manner, voice control may be enabled using one or more voice control commands captured by the one or more microphones 104 of the cabinet 100. On the other hand, audio output of the electronic device 150 may be provided via the one or more loudspeakers 103 of the cabinet 100.

Fig. 1h shows the mounting 101 being retracted into the cabinet 100. The rails 161, 162 are touching each other, such that the recess 167 for the mounting 101 has a reduced size. The user may push onto the retracted mounting 101 to cause the mounting 101 to move forward from the front panel 109 towards the user, as shown in Fig. 1i. The guide rails 161, 162 may then be moved apart from one another, in order to adjust the distance 165 between the rails 161, 162 to the size of the electronic device 100. As illustrated in Fig. 1j, the lower rail 162 may be moved downwards to adjust the distance 165 between the rails 161, 162. The two rails 161, 62 may be attached to one another and/or the lower rail 161 may be attached to the mounting 101 using one or more (vertical) bars or rods 168.

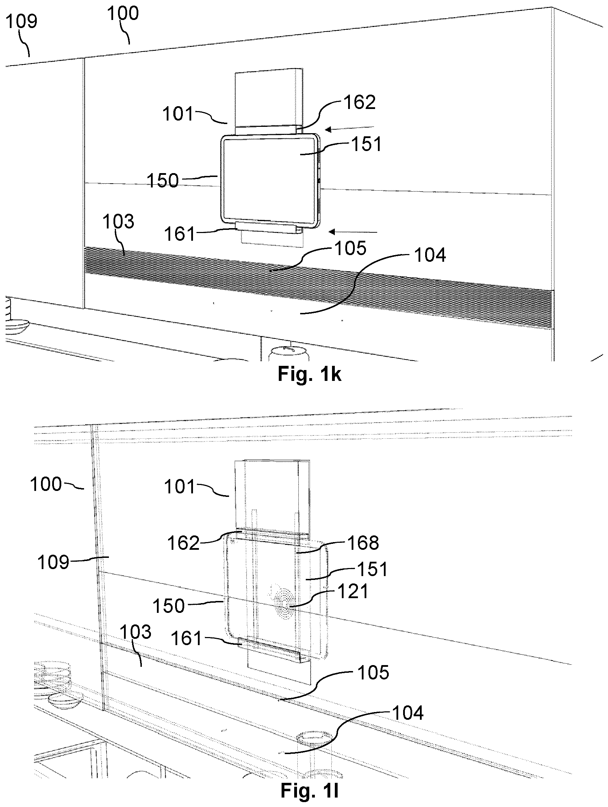

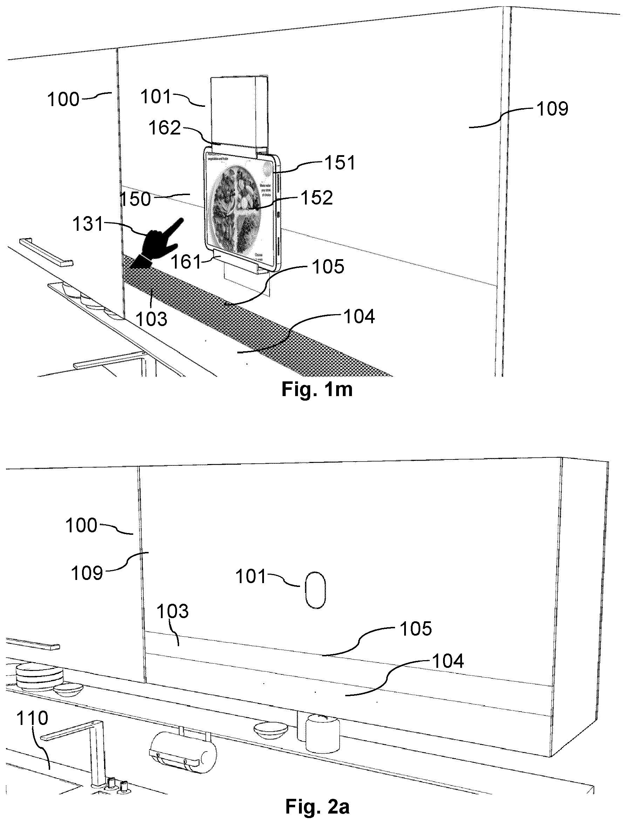

Fig. 1k shows how an electronic device 150 may be placed between the two rails 161, 162 by sliding the device 150 in a horizontal direction. Fig. 1l illustrates how the device 150 may be charged when placed within the mounting 101, and Fig. 1m shows how a user may interact with the content 152 (notably an image) shown on the display 151 of the electronic device 150.

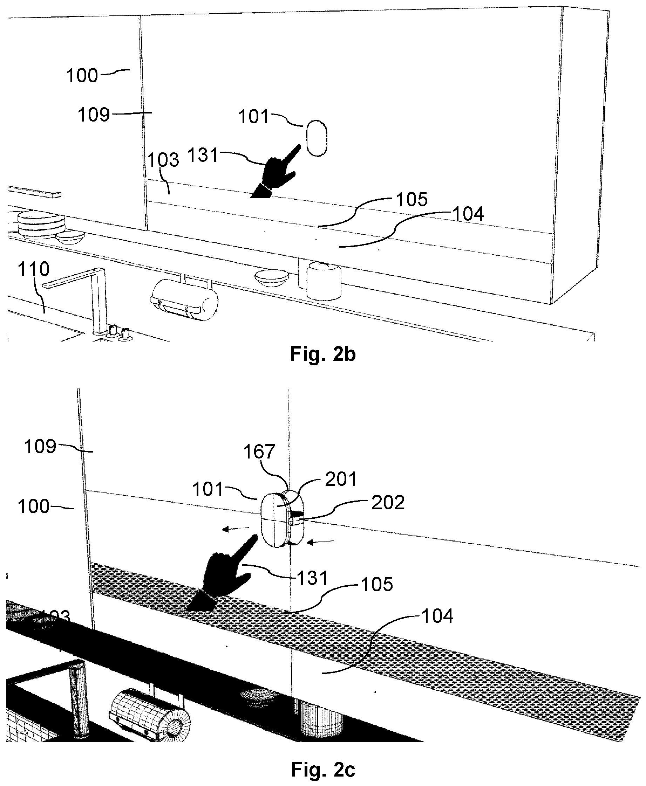

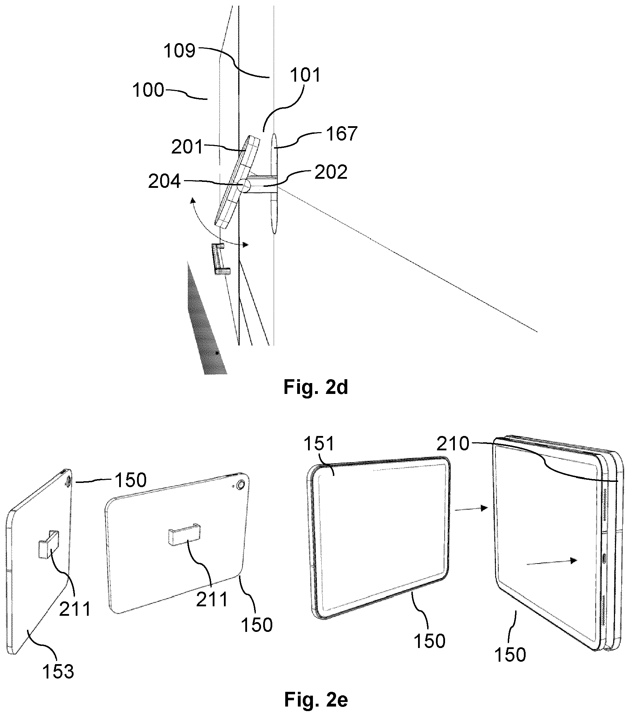

Figs 2a to 2j show a further example for a mounting 101 of a cabinet 100. Fig. 2a illustrates how the retracted mounting 101 forms a flat surface with the front panel 109 of the cabinet 100. The user may push the mounting 101 with a hand 131 to cause the mounting 101 to move out of the cabinet 100, as shown in Figs 2b and 2c. In the example of Figs. 2a to 2j, the mounting 101 forms a hook which interacts with an eyelet 211 on the backside 153 of an electronic device 150 to fix the electronic device 150 onto the cabinet 100. The hook of the mounting 101 may comprise a hooking section 201 which is placed into the eyelet 211 of the electronic device 150 and a holding section 202 which fixes the hooking section 201 onto the cabinet 100. As shown in Fig. 2d, the hooking section 201 and the holding section 202 may be attached to one another via an articulation 204 allowing the hooking section 201 to be rotated (e.g., around a horizontal axis). This allows the orientation of an electronic device 150 which is placed onto the mounting 101 to be modified.

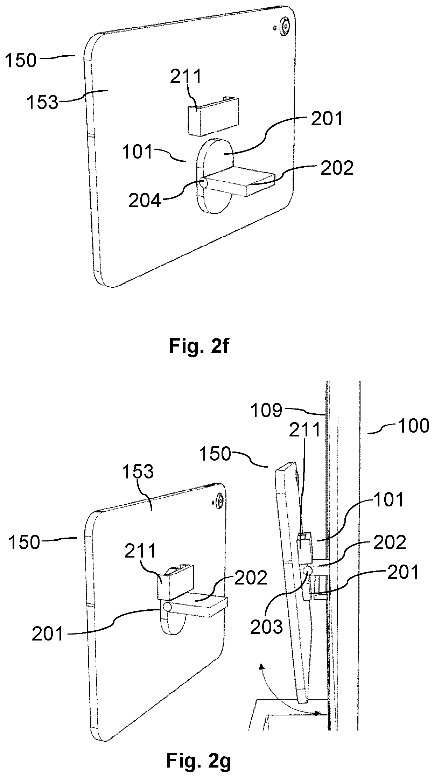

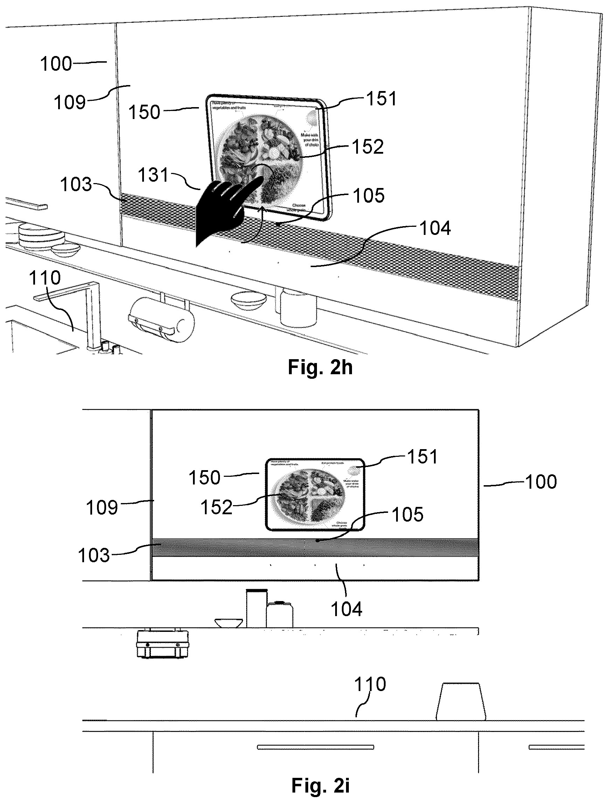

Fig. 2e shows different views of the electronic device 150, notably of the backside 153 with the eyelet 211 and of the display 151. The eyelet 211 may be attached to a projection case 210 of the electronic device 150. Figs. 2f and 2g show how the eyelet 211 on the backside 153 of the electronic device 150 may be placed around the hooking section 201 of the mounting 101 for fixing the electronic device 150 onto the cabinet 100. Fig. 2h illustrates how a user may interact with the electronic device 150 using one or more hands 131. Furthermore, the user may adjust the orientation of the electronic device 150. Fig. 2i shows a front view of the cabinet 100 with an electronic device 150 being attached and/or docketed to the cabinet 100.

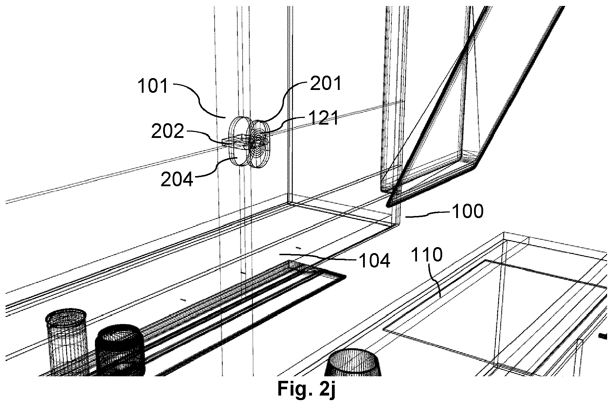

As shown in Fig. 2j, the mounting 101 may comprise a charging element 121, notably a charging coil, for charging the electronic device 150. The charging element 121 may be integrated into the hooking section 201 of the mounting 101.

Hence, the integration of consumer electronics into the kitchen interior is described. In particular, a kitchen cabinet 100 with a built-in smart speaker 170 is described. The cabinet 100 may comprise an integrated smart speaker 170, a gesture sensor 105 and/or a microphone array 104. The user may interface with the electronic device 150, notably with the displayed information on the electronic device 150, through voice and/or gesture. The user may place an electronic device 150 such as a tablet PC or any smart device in a movable mounting (also referred to as support) 101 of the cabinet 100. Furthermore, the user may push onto the retracted mounting 101, thereby revealing the seamlessly integrated mounting 101. Furthermore, the user may attach an electronic device 150 to the mounting 101, for interacting with the electronic device 150 through gesture, voice and/or touch (directly on the display 151 of the electronic device 150).

Hence, a cabinet 100 with an integrated support 101 for holding an electronic device 150 is described. The cabinet 100 comprises one or more built-in speakers 103, a gesture sensor 105, a microphone array 104, and/or a wireless charging coil 121. The support 101 may be configured to be revealed when the user pushes onto the front panel 109. The support 101 may comprise a lower rail 161 and an upper rail 162. At least one of the rails 162 may be movable up and/or down to adjust the support 101 to the display size of the electronic device 150.

The charging coil 121 may be placed behind the front panel 109, thereby allowing the electronic device 150 to be charged while the user interacts with the electronic device 150. The electronic device 150 may be placed between the rails 161, 162 using a sliding movement. As soon as the electronic device 150 is placed into the support 101, the auto-docking mechanism may be triggered and one or more services may be launched on the electronic device 150. Hence, the control unit 106 of the cabinet 100 may be configured to detect that an electronic device 150 has been placed onto the support 101 of the cabinet 100 (e.g. using sensor data of one or more sensors (not shown) of the cabinet 100). In reaction to this, a communication link may be set up between the control unit 106 and the electronic device 150. Furthermore, the control of the electronic device 150 using the one or more input elements 104, 105 (e.g. the gesture sensor 105 and/or the one or more microphones 104) of the cabinet 100 may be enabled. Alternatively, or in addition, output of content from the electronic device 150 using the one or more output elements 103 (e.g. the loudspeakers) of the cabinet 100 may be enabled. The user may then interact with the electronic device 150 via touch, voice and/or gesture.

As indicated above, the distance 165 between the rails 161, 162 may be adjustable. Figs. 1h to 1j show an example, where the extension rods or bars 168 between the rails 161, 162 are arranged such that the rods 168 are hidden behind the electronic device 150.

The example shown in Figs. 2a to 2j shows a support 101 comprising a holding hook 201, 202, for holding an eyelet 211 attached to the backside 153 of an electronic device 150. The support 101 may be revealed by pressing onto the front panel 109 of the cabinet 100. The hook 201, 202 may comprise two separate sections 201, 202 which are rotatably attached to one another, in order to allow a user to adjust the viewing angle of the electronic device 150.

The eyelet 211 may be provided as part of a custom cover 210 for an electronic device 150 (as shown in Fig. 2e). The hook 201, 202 may comprise an integrated wireless charging coil 121 for charging an electronic device 150.

The cabinet 100 described in the present document enables a user to interact with an electronic device 150 in a comfortable and reliable manner, notably when cooking. Furthermore, the cabinet 100 allows the electronic device 150 to be stored in a protected position with regards to dirt and/or fluid.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A cabinet (100) configured to be attached to and/or to be placed against a wall of a room; wherein the cabinet (100) comprises
- a mounting (101) for attaching a handheld electronic device (150) to the cabinet (100);
- one or more input elements (104, 105) configured to capture input data regarding a user input for the electronic device (150) placed within the mounting (101); and
- a control unit (106) configured to cause the electronic device (150) to be controlled in dependence of the input data.

2. The cabinet (100) of claim 1, wherein the control unit (106) is configured to
- detect that an electronic device (150) has been placed within the mounting (101) of the cabinet (100); and
- in reaction to this automatically establish a communication link with the electronic device (150) for allowing the electronic device (150) to be controlled based on the input data from the one or more input elements (104, 105) of the cabinet (100).

3. The cabinet (100) of any previous claims, wherein
- the cabinet (100) comprises a gesture sensor (105) as an input element (104, 105), notably at a front panel (109) of the cabinet (100), configured to sense gesture data regarding a gesture performed by the user of the cabinet (100) as input data; and
- the control unit (106) is configured to cause the electronic device (150) to be controlled based on the gesture data.

4. The cabinet (100) of any previous claims, wherein
- the cabinet (100) comprises one or more microphones (104) as an input element (104, 105), notably at a front panel (109) of the cabinet (100), configured to capture acoustic data regarding a voice control command of the user of the cabinet (100) as input data; and
- the control unit (106) is configured to cause the electronic device (150) to be controlled based on the acoustic data.

5. The cabinet (100) of any previous claims, wherein the mounting (101) is configured to move between a retracted position, where the mounting (101) forms a flat surface with a front panel (109) of the cabinet (100) and a mounting position, where the mounting (101) protrudes from the front panel (109) allowing an electronic device (150) to be placed within the mounting (101).

6. The cabinet (100) of claim 5, wherein the mounting (101) is configured such that
- pushing onto a front of the mounting (101) causes the mounting to automatically move from the retracted position to the mounting position; and/or
- the mounting (101) can be pushed from the mounting position to the retracted position by a user of the cabinet (100).

7. The cabinet (100) of any previous claims, wherein the mounting (101) is configured to be buried within a recess (167) of a front panel (109) of the cabinet (100).

8. The cabinet (100) of any previous claims, wherein
- the mounting (101) comprises an upper rail (162) for holding an upper edge of the electronic device (150) and a lower rail (161) for holding a lower edge of the electronic device (150); and
- the mounting (101) is configured such that the electronic device (150) can be slid between the upper rail (162) and the lower rail (161) to place the electronic device (150) within the mounting (101) and can be slid out from the upper and lower rails (161, 162) to remove the electronic device (150) from the mounting (101).

9. The cabinet (100) of claim 8, wherein the mounting (101) is configured such that a vertical distance (165) between the lower rail (161) and the upper rail (162) is adjustable to a size, notably to a display size, of the electronic device (150).

10. The cabinet (100) of claim 9, wherein
- the lower rail (161) is attached to the upper rail (162) via one or more extension rods (168) allowing the vertical distance (165) between the lower rail (161) and the upper rail (162) to be adjusted; and
- the one or more extension rods (168) are arranged such that the one or more extension rods (168) are hidden by the electronic device (150) placed within the mounting (101).

11. The cabinet (100) of any previous claims, wherein the mounting (101) comprises a hook (201, 202) configured to form a connection with a corresponding eyelet (211) at a backside (153) of the electronic device (150) for attaching the electronic device (150) to the cabinet (100).

12. The cabinet (100) of claims 11, wherein the hook (201, 202) comprises
- a hooking section (201) configured to be slid into the eyelet (211) at the backside (153) of the electronic device (150); and
- a holding section (202) configured to fix the hook (201, 202) to the cabinet (202); wherein the hooking section (201) and the holding section (202) are attached to one another via an articulation (203) allowing the hooking section (201) to be moved relative to the holding section (202) for changing an orientation of the electronic device (150) relative to a front panel (109) of the cabinet (100).

13. The cabinet (100) of any previous claims, wherein
- the cabinet (100) comprises one or more speakers (103), notably at a front panel (109) of the cabinet (100); and
- the control unit (106) is configured to
- receive an audio signal from the electronic device (105) placed within the mounting (101) of the cabinet (100); and
- cause the audio signal to be rendered by the one or more speakers (103).

14. The cabinet (100) of any previous claims, wherein the cabinet (100), notably the mounting (101), comprises a charging element (121), notably a charging coil, configured to charge the electronic device (150) which is placed within the mounting (101) of the cabinet (100).

15. The cabinet (100) of any previous claims, wherein the cabinet (100) is a kitchen cabinet, notably a kitchen cabinet of a fitted kitchen.

## Amended claims

### Amended claims in accordance with Rule 137(2) EPC.

1. A cabinet (100) configured to be attached to and/or to be placed against a wall of a room; wherein the cabinet (100) comprises a built-in docking station (170), which comprises
- a mounting (101) for attaching a handheld electronic device (150) to the cabinet (100);
- one or more input elements (104, 105) configured to capture input data regarding a user input for the electronic device (150) placed within the mounting (101); and
- a control unit (106) configured to cause the electronic device (150) to be controlled in dependence of the input data;
**characterized in that**
- the built-in docking station (170) comprises a gesture sensor (105), configured to sense gesture data regarding a gesture performed by the user of the cabinet (100) as input data; and
- the control unit (106) is configured to cause the electronic device (150) to be controlled based on the gesture data.

2. The cabinet (100) of claim 1, wherein the control unit (106) is configured to
- detect that an electronic device (150) has been placed within the mounting (101) of the cabinet (100); and
- in reaction to this automatically establish a communication link with the electronic device (150) for allowing the electronic device (150) to be controlled based on the input data from the one or more input elements (104, 105) of the cabinet (100).

3. The cabinet (100) of any previous claims, wherein
- the gesture sensor (105) is arranged at a front panel (109) of the cabinet (100).

4. The cabinet (100) of any previous claims, wherein
- the cabinet (100) comprises one or more microphones (104) as an input element (104, 105), notably at a front panel (109) of the cabinet (100), configured to capture acoustic data regarding a voice control command of the user of the cabinet (100) as input data; and
- the control unit (106) is configured to cause the electronic device (150) to be controlled based on the acoustic data.

5. The cabinet (100) of any previous claims, wherein the mounting (101) is configured to move between a retracted position, where the mounting (101) forms a flat surface with a front panel (109) of the cabinet (100) and a mounting position, where the mounting (101) protrudes from the front panel (109) allowing an electronic device (150) to be placed within the mounting (101).

6. The cabinet (100) of claim 5, wherein the mounting (101) is configured such that
- pushing onto a front of the mounting (101) causes the mounting to automatically move from the retracted position to the mounting position; and/or
- the mounting (101) can be pushed from the mounting position to the retracted position by a user of the cabinet (100).

7. The cabinet (100) of any previous claims, wherein the mounting (101) is configured to be buried within a recess (167) of a front panel (109) of the cabinet (100).

8. The cabinet (100) of any previous claims, wherein
- the mounting (101) comprises an upper rail (162) for holding an upper edge of the electronic device (150) and a lower rail (161) for holding a lower edge of the electronic device (150); and
- the mounting (101) is configured such that the electronic device (150) can be slid between the upper rail (162) and the lower rail (161) to place the electronic device (150) within the mounting (101) and can be slid out from the upper and lower rails (161, 162) to remove the electronic device (150) from the mounting (101).

9. The cabinet (100) of claim 8, wherein the mounting (101) is configured such that a vertical distance (165) between the lower rail (161) and the upper rail (162) is adjustable to a size, notably to a display size, of the electronic device (150).

10. The cabinet (100) of claim 9, wherein
- the lower rail (161) is attached to the upper rail (162) via one or more extension rods (168) allowing the vertical distance (165) between the lower rail (161) and the upper rail (162) to be adjusted; and
- the one or more extension rods (168) are arranged such that the one or more extension rods (168) are hidden by the electronic device (150) placed within the mounting (101).

11. The cabinet (100) of any of the previous claims 1 to 7, wherein the mounting (101) comprises a hook (201, 202) configured to form a connection with a corresponding eyelet (211) at a backside (153) of the electronic device (150) for attaching the electronic device (150) to the cabinet (100).

12. The cabinet (100) of claims 11, wherein the hook (201, 202) comprises
- a hooking section (201) configured to be slid into the eyelet (211) at the backside (153) of the electronic device (150); and
- a holding section (202) configured to fix the hook (201, 202) to the cabinet (202); wherein the hooking section (201) and the holding section (202) are attached to one another via an articulation (203) allowing the hooking section (201) to be moved relative to the holding section (202) for changing an orientation of the electronic device (150) relative to a front panel (109) of the cabinet (100).

13. The cabinet (100) of any previous claims, wherein
- the cabinet (100) comprises one or more speakers (103), notably at a front panel (109) of the cabinet (100); and
- the control unit (106) is configured to
- receive an audio signal from the electronic device (105) placed within the mounting (101) of the cabinet (100); and
- cause the audio signal to be rendered by the one or more speakers (103).

14. The cabinet (100) of any previous claims, wherein the cabinet (100), notably the mounting (101), comprises a charging element (121), notably a charging coil, configured to charge the electronic device (150) which is placed within the mounting (101) of the cabinet (100).

15. The cabinet (100) of any previous claims, wherein the cabinet (100) is a kitchen cabinet, notably a kitchen cabinet of a fitted kitchen.
